# EUROPEAN PATENT APPLICATION

(11) **EP 1 383 258 A2**
(43) Date of publication of application: **21.01.2004**
(21) Application number: 03019672.9
(22) Date of filing: 23.12.1999
(51) Int. Cl.: H04B 17/00, H04Q 7/30

(54) **Base station with automatic cable loss compensation**

(30) Priority: 05.02.1999 US 118824
(62) Divisional of application: 99967532.5
(71) Applicant: INTERDIGITAL TECHNOLOGY CORPORATION, Wilmington, DE 19801 (US)
(72) Inventor: Bird, John, Huntington Station, NY 11746 (US); Kazakevich, Leonid, Plainview, NY 11803 (US)
(74) Representative: Tomlinson, Edward James

(57) **Abstract**

The present invention relates to a TDD base station wherein at least one cable extends between first and second locations, the base station comprising:
a first power level detection means 402 for determining transmit signal power level at said first location and a second power level detection means 403 at said second location;
feed back means (350) for feeding back the transmit signal power level from said second location to said first location;
comparing means (300) at the first location for comparing power levels from the first and second power level detection means and for determining a loss between the two locations;
attenuating means 401, 404 at the first location for controlling the power level of the transmit signal; and,
control means 311 at the first location responsive to the comparing means 311 for controlling the attenuating means.

## Description

### BACKGROUND OF THE INVENTION

### Field of the Invention

The present invention relates to wireless digital communications systems. More particularly, the present invention relates to a code-division multiple access (CDMA) communication system employing a base station having remotely located RF power amplification equipment.

### Description of the Prior Art

CDMA systems provide an efficient use of the limited bandwidth of the RF spectrum, thereby permitting a greater amount of information transmission with less signal distortion than communications systems using other techniques, such as time division multiple access and frequency division multiple access.

In a CDMA communication system, an information signal at the transmitter is mixed with a pseudorandom spreading code which spreads the information across the entire bandwidth employed by the system. The spread signal is upconverted to an RF signal for transmission. A receiver, identified by the pseudorandom spreading code, downconverts the transmitted spread-spectrum signal and mixes this with the pseudorandom spreading code to reproduce the original information signal.

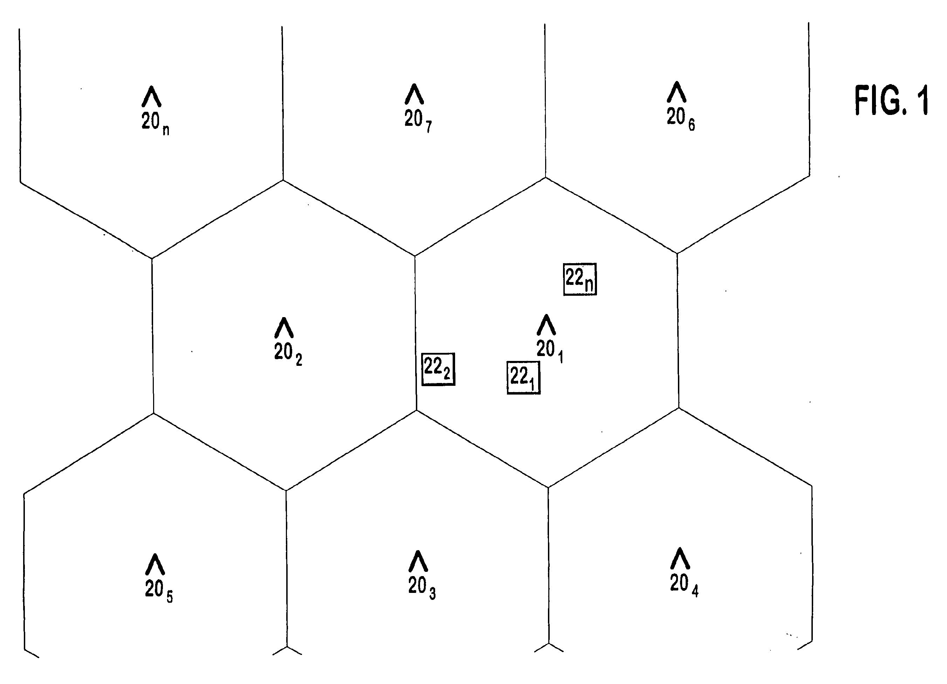

A prior art CDMA communication system is shown in **Figure 1.** The communication system has a plurality of base stations **20**_{**1**}**, 20**_{**2**}**, ... 20**_{**n**} connected together through land lines via a local public switched telephone network (PSTN) or by a wireless link. Each base station **20**_{**1**}**,20**_{**2**}**,... 20**_{**n**} communicates using spread spectrum CDMA transmissions with mobile and field subscriber units stations **22**_{**1**}**, 22**_{**2**}**, ... 22**_{**n**} located within its cellular area. Because a signal transmitted from one base station appears as noise to another base station, and thereby interferes with the ability of the second base station to receive transmissions from subscriber units located within its cellular area, it is desirable to carefully limit the amount of power transmitted from each base station **20**_{**1**}**, 20**_{**2**}**, ... 20**_{**n**}**.**

A CDMA base station typically has equipment such as an RF power amplifier and related electronics (not shown) located in a sheltered ground station for reception and transmission of RF signals and an antenna, or multiple antennae, mounted at some distance from the sheltered ground station. A significant amount of RF energy is lost through the cable connecting the ground station to the antenna. Accordingly, it is advantageous to co-locate or integrate the RF amplifier and related electronics with the antenna. This arrangement results in cost savings and energy efficiency because it permits the use of a lower power RF amplifier than is necessary when the RF amplifier is located at a distance from the antenna. Although RF power is still lost in the cable which connects the ground station with the RF amplifier located at the antenna, far less power is lost than in the case where the RF amplifier is located in the ground station.

In order to control the amount of power transmitted at the antenna, the power loss through the cable must be measured and compensated. In addition, the power loss through the cable varies with temperature. This variability causes a variation in signal level to the RF amplifier, which can result in overpowering or underpowering the RF amplifier. Overpowering the RF amplifier can cause interference with neighboring cell sites and can cause distortion of the transmitted signal which produces additional undesirable noise. Underpowering the RF amplifier can result in the transmission of a signal that is too weak to effectively communicate with the subscriber units within the cell area of the transmitter.

The measurement of the power of an RF signal received by a base station is also critical to an effective CDMA system. Since this measurement is typically made at the ground station, variability in power loss through the cable also adversely affects the accuracy of the received power measurement.

Accordingly, there is a need for continuous, automatic compensation of the power loss in the cable between the antenna and the ground station in order to effectively control RF transmission power from the base station and more accurately to measure power received from subscriber units.

### SUMMARY OF THE INVENTION

The present invention compensates for the variability of transmitted RF signal levels in a CDMA system where a cable connects ground-based low signal level RF equipment with remotely located RF power amplification equipment. The RF signal level is measured at the ground-based RF equipment end of the cable and also at the RF power amplifier equipment end of the cable. Changes in the loss across the cable are compensated with variable attenuators.

Accordingly, it is an object of the present invention to provide automatic cable loss compensation for a CDMA communication station having remotely located RF power amplification equipment

Other objects and advantages of the present invention will become apparent after reading the detailed description of the presently preferred embodiment.

### BRIEF DESCRIPTION OF THE DRAWINGS

**Figure 1** is an illustration of a prior art CDMA system.
**Figure 2** is an illustration of a base station made in accordance with the present invention with an RF power amplifier located remotely from a ground station.
**Figure 3** is a block diagram of a CDMA ground station with remotely located RF power amplifier and antenna in accordance with the present invention.
**Figure 4** is a flow diagram of a method for adjusting cable compensation attenuators in accordance with the present invention.

### DESCRIPTION OF THE PREFERRED EMBODIMENTS

The preferred embodiments will be described with reference to the drawing figures where like numerals represent like elements throughout.

A communications network employing the present invention is shown in **Figure 1**. The communications network includes a plurality of base stations **20**_{**1**}**, 20**_{**2**}**, ... 20**_{**n**}**,** each of which supports wireless communication with mobile and fixed subscriber units **22**_{**1**}**, 22**_{**2**}**, ... 22**_{**n**} that are located within the coverage area of the respective base station **20**_{**1**}**, 20**_{**2**}**, ... 20**_{**n**}**.**

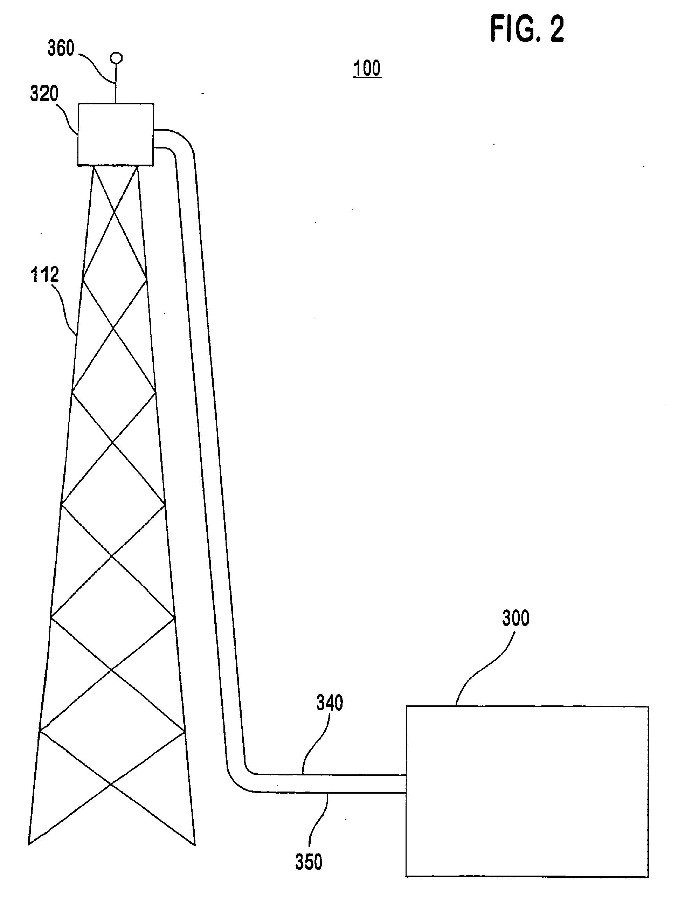

Referring to **Figure 2,** a base station **100** with ground-based receiving and transmitting equipment **300,** a remotely located mast head unit **320** and an antenna **360** mounted upon a tower **112** is shown. The mast head unit **320** includes an RF power amplifier and related electronics. A coaxial cable **340** conveys RF signals between the ground-based equipment **300** and the mast head unit **320.** These signals include the incoming signals which are received from subscriber units **22**_{**1**}**, 22**_{**2**}**, ... 22**_{**n**} at the antenna **360,** processed by the mast head unit **320** and forwarded to the ground-based equipment **300;** and the outgoing signals which are received by the ground-based equipment **300** forwarded to the mast head unit **320** and transmitted to the subscriber units **22**_{**1**}**, 22**_{**2**}**, ... 22**_{**n**}**.** A separate cable assembly **350** conveys amplifier prime power and control signals to and from the mast head unit **320.**

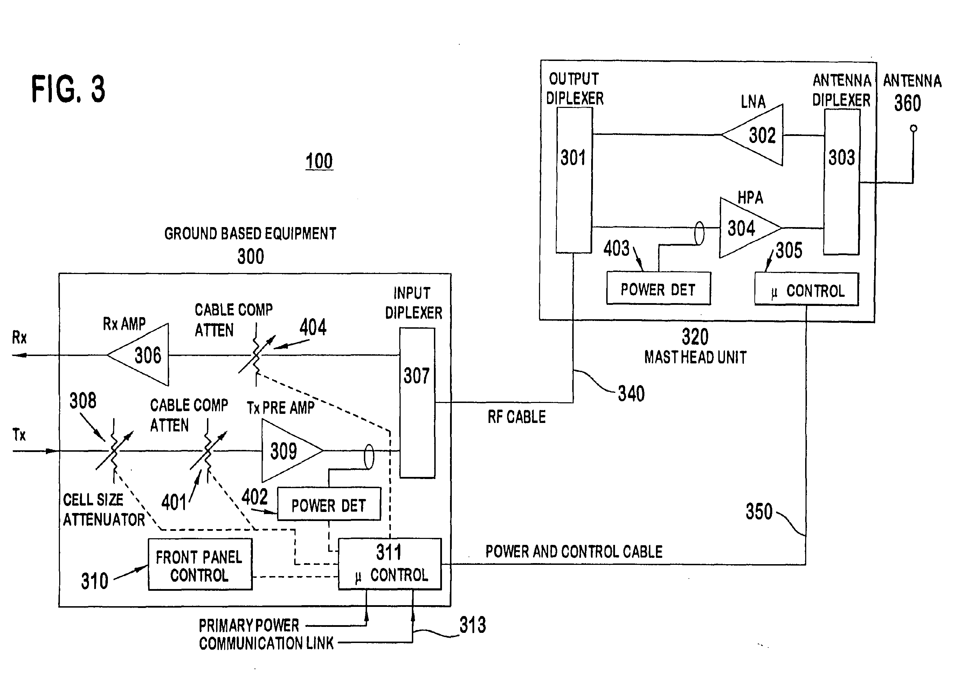

A detailed schematic of a base station **100** with a remotely located RF power amplifier is shown in **Figure 3**. The ground-based equipment **300** receives a signal to be transmitted (Tx), which has already been upconverted to the desired transmission frequency. An infinitely variable attenuator **308** adjusts the Tx signal level to limit power output as appropriate for the transmission area (cell size) of the base station **100.** A touchpad front panel control **310** permits manual adjustment of the cell size attenuator **308.** This adjustment is controlled by a microcontroller **311** which may also receive a command via a communications link **313** to provide remote adjustment of the cell size attenuator **308.**

The level-adjusted Tx signal is level adjusted a second time by a variable cable compensation attenuator **401** and is buffered by a transmission preamplifier **309.** A first power level detector **402** measures the power of the level adjusted Tx signal and the Tx signal is then forwarded through an input signal diplexer **307** to the RF cable **340.** A diplexer allows bidirectional transmission of signals on a single cable. Thus, the input signal diplexer **307** and output signal diplexer **301** permit the level-adjusted Tx signal to be sent on the RF cable **340** while also simultaneously permitting reception of a level-adjusted received (Rx) signal from the mast head unit **320.**

The Tx signal is sent through the RF cable **340** to an output diplexer **301** in the mast head unit **320.** A second power level detector **403** in the mast head unit **320** measures the power of the signal to be transmitted after it has passed through the input diplexer **301.** The signal is then amplified by a high power amplifier (HPA) **304** and routed through an antenna diplexer **303** for transmission by the antenna **360.** Power for the electronics in the mast head unit **320** and other control signals are supplied from the ground-based equipment **300** by power and control cable **350.**

A signal from a subscriber unit **22**_{**1**} **22**_{**2**}**, ... 22**_{**n**} which is received at the antenna **360,** is routed through the antenna diplexer **303** to a low noise amplifier (LNA) **302.** The received (Rx) signal is amplified by the LNA **302** and routed through the output diplexer **301** and then is conveyed to the ground based equipment **300** through the RF cable **340.** The Rx signal is stripped off the RF cable **340** by the input diplexer **307**. The received signal is level adjusted by a second variable cable compensation attenuator **404** and then buffered by an amplifier **306** and routed to downconverter equipment (not shown).

A microcontroller **305** in the mast head unit **320** sends the power measurement made at the second power level detector **403** to the microcontroller **311** in the ground-based equipment **300.** The microcontroller **311** in the ground-based equipment **300** compares the power level measured at the output of the transmission pre-amplifier **309** with the power level measured at the input to the high power amplifier **304** in the mast head unit **320.** The microcontroller **311** then adjusts the first variable cable attenuator **401** to maintain a constant power level at the input to the high power amplifier **304,** and makes an identical adjustment to the second infinitely variable cable attenuator **404** to compensate for the effect of variable cable loss on the received signal. The control system comprising ground-based power level detector **402,** mast head unit power level detector **403,** the first and second variable cable attenuators **401, 404,** mast head microcontroller **305,** and ground-based unit microcontroller **311** provides a continuous automatic adjustment for the variable loss associated with the RF cable **340.**

An alternate embodiment of the invention combines cell size attenuator **308** with cable compensation attenuator **401,** whereby the attenuation range of the combined attenuator is sufficiently large to accommodate the range required by both of the attenuators **308, 401.**

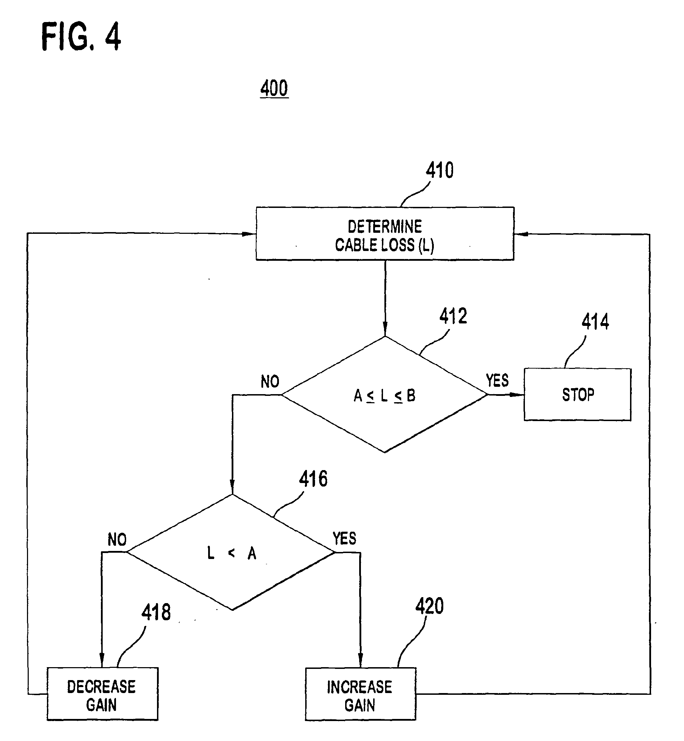

**Figure 4** shows the procedure **400** for cable loss compensation **400** which adjusts cable compensation attenuators **401, 404** in accordance with the present invention. The cable compensation method **400** is designed to adjust cable loss to between a predetermined lower limit, (A), and a predetermined upper limit, (B). In this procedure **400,** cable loss includes the effect of the first cable compensation attenuator **401**. At step **410**, a measurement of cable loss (L) is made by comparing the RF power level measured at the first power detector **402** with the RF power level measured at the second power level detector **403**. At step **412**, cable loss L is compared to predetermined limits lower and upper limits A and B respectively. If the cable loss L is between lower limit A and upper limit B, or is equal to either limit, then no further adjustment is made and the cable loss compensation procedure terminates at block **414.** If the cable loss L is either higher than upper limit B or lower than lower limit A, then a further comparison is made a step **416.** At step **416,** a determination is made whether the cable loss L is lower than lower limit A. If so, then the gain of the cable attenuators **402, 403** is decreased, as shown at step **420.** If the cable loss L is not lower than lower limit A, it must be higher than upper limit B, and the gain of the cable attenuators **402, 403** is increased as shown at step **418.** Upon completion of an increase or decrease of cable loss compensator gain at step **418** or **420**, cable loss L is again measured at block **410.** This procedure is repeated until cable loss L is brought within the predetermined limits A, B and the compensation procedure terminates at step **414**. The cable compensation procedure **400** may be performed on a repeated basis at a rate which is appropriate for maintaining constant output power under conditions which cause cable loss L to fluctuate.

Although the invention has been described in part by making detailed reference to certain specific embodiments, such details is intended to be instructive rather than restrictive. Although the invention has been described in the preferred embodiment for use in a CDMA communication system, it is equally applicable to other types of communication systems such as Timed Division Duplex (TDD), Frequency Division Duplex (FDD), Multimedia Distribution System (MDS), Local Multipoint Distribution Systems (LMDS), Unlicense National Information Infrastructure/National Information Infrastructure (UNII/NII), next generation and other cellar radio communication systems. It will be appreciated by those skilled in the art that many variations may be made in the structure and mode of operation without departing from the spirit and scope of the invention as disclosed in the teachings herein.

## Claims

1. A TDD base station wherein at least one cable extends between first and second locations, the base station comprising:
a first power level detection means 402 for determining transmit signal power level at said first location and a second power level detection means 403 at said second location;
feed back means (350) for feeding back the transmit signal power level from said second location to said first location;
comparing means (300) at the first location for comparing power levels from the first and second power level detection means and for determining a loss between the two locations;
attenuating means 401, 404 at the first location for controlling the power level of the transmit signal; and,
control means 311 at the first location responsive to the comparing means 311 for controlling the attenuating means.

2. The base station of claim 1, wherein the first location comprises a base station mast head unit, the second location comprises a base station ground-based equipment, whereby the second location is remotely connected to the first location by a cable, and a signal sent from said ground-based equipment to said mast head unit experiences attenuation, the system further comprising;
at said ground-based equipment (300):
a first power level detector (402) coupled to a transmit signal line for outputting a first power level signal;
a compensation attenuator (401) coupled to the transmit signal line;
at least one controller for controlling the compensation attenuator (401); and
at said mast head unit (320):
a second power level detector (403) coupled to the transmit signal line for outputting a second power level signal, said second power level detector having means for transmitting the second power level signal to said ground-based equipment; said second power level signal being based upon *the* amount of said attenuation;
whereby said controller (311) compares said first and second power level signals and controls the compensation attenuator (401) accordingly.

3. The base station as recited in claim 2 further comprising a second compensation attenuator (404) coupled to a receive signal line,

4. The base station as recited in claim 3 wherein the controller (311) controls the second compensation attenuator (404).

5. The base station as recited in claim 2 further comprising a power and control cable (350) connected between the mast head unit and the ground-based equipment for carrying control signals between the first and second power level detectors (402, 403).

6. The base station as recited in claim 3 further comprising a first diplexer (307) located in the ground-based equipment and coupled to the receive signal line, the transmit signal and the cable.

7. The base station as recited in claim 2 wherein the ground-based equipment further comprises a cell size attenuator (308) coupled to the transmit signal line.

8. The base station as recited in claim 2 wherein the ground-based equipment further comprises a transmit pre-amplifier coupled (309) to the transmit signal line.

9. The base station as recited in claim 3 further comprising a second diplexer (301) located in the mast head unit and coupled to the receive signal line, the transmit signal line and the cable.

10. The base station as recited in claim 2 wherein the mast head unit further comprises a high power amplifier (304) coupled to the transmit signal line.

11. The base station as recited in claim 3 wherein the mast head unit further comprises a low noise amplifier (302) coupled to the receive signal line.

12. The base station as recited in claim 3 wherein the mast head unit further comprises an antenna diplexer (303) coupled to an antenna (360), the transmit signal line, and the receive signal line.
